# EUROPEAN PATENT APPLICATION

(11) **EP 4 478 006 A1**
(43) Date of publication of application: **18.12.2024**
(21) Application number: 24182718.7
(22) Date of filing: 17.06.2024
(51) Int. Cl.: G01F 23/00, G01F 23/2962, G01F 25/20, G01S 15/08, G01N 29/024

(54) **LIQUID LEVEL MEASURING DEVICE AND OPERATING METHOD THEREFOR**

(30) Priority: 15.06.2023 NL 2035111
(71) Applicant: MuniSense B.V., 2352CZ Leiderdorp (NL)
(72) Inventor: Duindam, Timo Daniel Gerardus, Noordwijkerhout (NL); Mulder, Johannes Martinus, Haarlem (NL)
(74) Representative: IP Maison

(57) **Abstract**

The invention relates to a device for measuring a liquid level of a body of liquid, comprising:
- a housing with a first end and a second end opposite the first end,
- an ultrasonic transducer assembly for emitting and receiving ultrasonic waves, and
- a sensor for determining a speed of sound in the body of liquid,
wherein a line is provided that is at least partially flexible and configured to suspend the housing in the body of liquid with the first end of the housing forming a top side of the housing and the second end of the housing forming a bottom side of the housing, and wherein the ultrasonic transducer assembly is arranged in or on the housing at the first end of the housing for emitting and receiving ultrasonic waves in an upwards direction substantially parallel to the line when the housing is suspended from the line in the body of liquid.

## Description

### BACKGROUND OF THE INVENTION

The invention relates to a device for measuring a liquid level of a body of liquid. The body of liquid may for instance be contained in a storage tank or other type of container, but may also be or be part of an outdoor water system, e.g. ground water, river, sea, etc.

EP0138541A1 discloses a prior art liquid level measuring device for a storage tank. The depth of liquid in the storage tank is determined by means of ultrasonic or like pulses which are transmitted through the liquid and reflected partly by the surface of the liquid and partly by one or more reference reflectors.

JP2004/271390A discloses another prior art liquid level measuring device for a storage tank, wherein the device is arranged on the bottom of the storage tank and uses ultrasonic pulses which are transmitted through the liquid and reflected by the surface of the liquid. Similar devices are also known to be arranged on a sea bottom.

Both discussed prior art liquid level measuring devices have in common that the ultrasonic pulses are directed from within the body of liquid towards the surface of the liquid thus requiring a direct rigid link with a fixed reference like a bottom or side wall associated with the body of liquid. This is relatively easy in case of a storage tank. Arranging the devices on the bottom or in a large-diameter measurement tube allows to keep the column of liquid between the ultrasonic transducer assembly and the surface of the liquid free of obstacles and other interfering objects.

When the bottom or side wall associated with the body of liquid is not available as a fixed reference, BE1002682 and KR20160098633 provide solutions to determine the transition between liquid and air by measuring a change in parameter values. BE1002682 is able to measure a difference in speed of sound of the two mediums while KR20160098633 is able to measure a difference in electric conductivity of the two mediums. Once the probe is positioned at the transition between liquid and air, the liquid level can be determined. In BE1002682 this is done by determining the amount of line carrying the probe. In KR20160098633 this is done by ultrasonically measuring a distance to a reference above the probe.

A drawback of the prior art liquid level measuring devices is the limited use of the devices and poor accuracy of the liquid level measurements. Currently, there is a need for a liquid level measuring device that can be used in different situations, e.g. different types of bodies of liquid, different conditions, different liquid depths, varying temperatures, and can be used for both a quick liquid level measurement, i.e. for a short duration of time like a reference or calibration measurement, and long-term liquid level measurements, i.e. for a long duration of time.

The required versatility of the liquid level measuring device may also require the device to be easily transportable and/or configured to be manipulated by a single person. Although some of the prior art devices meet these demands partially, a remaining problem is that the accuracy and/or time duration of the liquid level measurements is not sufficient for all required situations.

### SUMMARY OF THE INVENTION

In view of the above it is an object of the invention to provide a versatile device for measuring a liquid level of a body of liquid in a variety of different situations and with sufficient accuracy.

According to a first aspect of the invention, there is provided a device for measuring a liquid level of a body of liquid, comprising:
- a housing with a first end and a second end opposite the first end,
- an ultrasonic transducer assembly for emitting and receiving ultrasonic waves, and
- a sensor for determining a speed of sound in the body of liquid,

wherein a line is provided that is at least partially flexible and configured to suspend the housing in the body of liquid with the first end of the housing forming a top side of the housing and the second end of the housing forming a bottom side of the housing,
and wherein the ultrasonic transducer assembly is arranged in or on the housing at the first end of the housing for emitting and receiving ultrasonic waves in an upwards direction substantially parallel to the line when the housing is suspended from the line in the body of liquid in order to reflect from a liquid-air interface,
and wherein the device further includes a control unit to operate the ultrasonic transducer assembly and to receive an output from the ultrasonic transducer assembly and the sensor to determine a height of a liquid column present above the device based on said output.

An advantage of the device according to the first aspect of the invention is that a line is provided that is used to suspend the device in the body of liquid in combination with the upwards directed ultrasonic transducer assembly configured to measure a distance between the device and the surface of the body of liquid, i.e. the liquid-air interface. By directing the ultrasonic waves in an upwards direction substantially parallel to the line when the housing is suspended from the line in the body of liquid, interference by the line can be kept to a minimum, and there is no need to arrange the device on the bottom of a tank or sea bottom because the line is used to support the device. An additional advantage is that by suspending the device in the body of liquid, the device can be kept in a predetermined distance range with respect to the surface of the body of liquid resulting in an improved accuracy of the liquid level measurement independent of the total liquid height of the body of liquid.

By providing a sensor for determining a speed of sound in the body of liquid, the accuracy of the liquid level measurement can be further improved thereby extending the operational use of the device to different liquids and temperatures.

Although KR101169197B1 discloses a water depth measuring device which is suspended by a line, and further discloses to use a double-sided ultrasonic sensor allowing to simultaneous measure a water depth and sound speed in the body of liquid to improve the accuracy of the measurement when the sound speed may vary, the accuracy is still insufficient for most situations when the distance between the device and the bottom is relatively large, because the disclosed device is based on another measurement principle and uses ultrasonic pulses which are transmitted through the liquid and reflected by the bottom associated with the body of liquid.

In an embodiment, the line is connected to the ultrasonic transducer assembly and/or sensor and configured for transferring power and/or data between the device and an external device, e.g. between the control unit and a controller or other external device. The wires to provide the power and/or data connection are preferably integrated in the line.

An advantage of using the line for both suspending the device and connecting the device to an external device is that a single line is used for mechanical support and electrical and/or data connection, so that there is less risk of interference or damage to the line. Alternatively, a power supply may be provided in the device and/or a wireless data connection is used to avoid the use of other separate wires. A wireless and/or non-electrical data connection may include known technologies such as WiFi, Bluetooth and/or optical data connections, e.g. infrared or optical fiber.

In an embodiment, the ultrasonic transducer assembly includes at least two portions that are arranged at opposite sides of the line. The ultrasonic transducer assembly may for instance completely surround an opening through which the line extends. An arrangement at opposite sides of the line means that the ultrasonic transducer is arranged in a plane substantially perpendicular to the line with two portions of the ultrasonic transducer being located at opposite sides of an intersection of the line (or an extension thereof) with said plane. In an embodiment, the ultrasonic transducer assembly is rotational symmetric about the line.

In an embodiment, the sensor comprises a temperature sensor to measure a temperature of the liquid in the body of liquid. In this way, the speed of sound in the body of liquid can indirectly be determined and/or determined with greater accuracy.

In an embodiment, the sensor comprises a conductivity sensor to measure a salinity of the liquid. In this way, the speed of sound in the body of liquid can be determined with greater accuracy as the speed of sound in the body of liquid is also dependent on the salinity of the liquid.

In an embodiment, the temperature sensor is arranged in a tube that is configured to be surrounded by the liquid when the device is submersed in the body of liquid, and wherein the temperature sensor is substantially isolated from the housing. Preferably, the temperature sensor is thermally connected to the body of liquid, e.g. using thermal paste, resulting in a fast thermal response of the temperature sensor.

In an embodiment, the tube with the temperature sensor is arranged not to extend beyond the second end of the housing. This allows the housing to protect the tube (and thus the temperature sensor) against damage.

In an embodiment, the line and the housing of the device in use define a lowest pivot of a pendulum motion of the housing, wherein the housing has a center of mass that is at a larger distance from said lowest pivot than from the second end of the housing. This has the advantage that the weight of the housing will provide a relatively large restoring moment on the device when suspended from the line in the body of liquid thus resulting in a stable orientation of the housing during measurements even in the presence of some disturbances.

The stability of the device when suspended from the line in the body of liquid may alternatively, or additionally, be improved by increasing the difference between the absolute gravitational force and the absolute buoyancy force acting on the device when suspended from the line in the body of liquid. A relatively large net force down also has the advantage that the line is kept taut thus improving measurement accuracy.

In an embodiment, the sensor comprises an ultrasonic transducer assembly to measure a traveling time of an ultrasonic wave over a predetermined distance to determine a speed of sound in the body of liquid.

In an embodiment, the sensor comprises a temperature sensor to measure a temperature of the liquid and an ultrasonic transducer assembly to measure a traveling time of an ultrasonic wave over a predetermined distance to determine a speed of sound in the body of liquid, and wherein the sensor is further configured to determine a density and/or composition of the liquid of the body of liquid.

In an embodiment, the line has a first part and a second part, wherein the first part of the line extends between the housing and the second part of the line, and wherein the first part has a higher bending stiffness than the second part. This allows to shift the lowest pivot of a pendulum motion of the housing to a larger distance from the housing thereby improving stability of the device when suspended from the line in the body of liquid.

In an embodiment, when the sensor includes a temperature sensor, the temperature sensor is configured to determine the temperature of the liquid with an accuracy of at most 0.5 degrees Celsius, for example at most 0.3 or 0.1 degrees Celsius.

In an embodiment, when the sensor includes a temperature sensor, the temperature sensor has a measurement range starting at least at or below 0 degrees Celsius, e.g. at least at or below -5 degrees Celsius, and ending at least at or above 30 degrees Celsius, e.g. at least at or above 35 degrees Celsius.

In an embodiment, the ultrasonic transducer assembly has a first resonance frequency of at least 100 kHz, preferably above 200 kHz, and of at most 20MHz, preferably of at most 10MHz, e.g. between 250 kHz and 1MHz.

In an embodiment, the device part suspended by the line fits in a cylinder having a diameter of 30mm, preferably a diameter of 25mm.

In an embodiment, the device includes spacers extending from the housing to keep a minimum distance from a side wall, e.g. to keep the device in a central region of a tube. The spacers may be replaceable or adjustable to set different minimal distances between housing and side wall.

In an embodiment, the determination of the height of liquid above the device, I.e. a distance between the device and the liquid-air interface takes place in the control unit. Alternatively, this determination is carried out in an external device, e.g. a controller, connected wirelessly to the control unit or connected via the line to the control unit of the device. The same may apply to the determination of the liquid level based on the height of liquid above the device.

In an embodiment, the ultrasonic transducer assembly includes one or more ultrasonic transducers. In case of multiple ultrasonic transducers, at least one ultrasonic transducer may be used to emit ultrasonic waves, while at least one other ultrasonic transducer is used to detect reflected ultrasonic waves. Alternatively, the one or more ultrasonic transducers are used to emit ultrasonic waves and to detect reflected ultrasonic waves.

However, after operating an ultrasonic transducer to emit ultrasonic waves, the ultrasonic transducer may keep on vibrating for a while, which vibrations than dampen over time. During at least a portion of this so-called ring-down time, it may be difficult to detect reflected ultrasonic waves, because typically a reflected ultrasonic wave is detected by triggering a threshold, which threshold may not be triggered by the ultrasonic transducer itself, so that one has to wait until the amplitude of the vibrations have reduced to below the threshold while the reflected wave is still able to trigger the threshold. The time-period that it is not possible to detect reflected ultrasonic waves corresponds to a lower detection limit of the liquid level, i.e. a minimum height of liquid above the device that is detectable by the device.

When relatively small heights of liquid above the device must be detectable, it is possible to reduce the ring-down time to make this possible. Optimizing the ring-down time of a ultrasonic transducer may be obtained by choosing proper values for the following parameters:
a. amplitude of a driving signal for the ultrasonic transducer, wherein a smaller amplitude results in a smaller ring-down time;
b. duration of the driving signal, e.g. number of pulses, wherein a smaller duration, e.g. smaller number of pulses results in a smaller ring-down time;
c. the frequency of the driving signal. When the driving frequency is closer to the resonance frequency of the ultrasonic transducer, the longer the ring-down time;
d. amplification of the signal of the ultrasonic transducer, wherein a lower amplification results in a shorter ring-down time; and
e. threshold for triggering by the receipt of the reflected ultrasonic wave, wherein a higher threshold results in a shorter ring-down time.

The ring-down time may be set to a predetermined value depending on the application and/or expected liquid levels. When higher liquid levels are expected, the ring-down time may be chosen longer, which can be done without problems as it will take longer for the ultrasonic waves to return to the device. The longer ring-down time is associated with higher amplitude signals such that the amplitude of the returning ultrasonic waves is still high enough to be detectable even for higher liquid levels.

Similarly, when smaller liquid levels are expected, the ring-down time may be chosen shorter, so that the ring-down vibration of the ultrasonic transducer has dampened quickly enough to below the trigger threshold allowing to detect the reflected ultrasonic waves.

The control unit of the device may be configured to vary the ring-down time. In an embodiment, the control unit may be configured to sweep the ring-down time over a predetermined range. This may be done for every measurement but may also be done regularly or only at the startup of the device.

In an embodiment, the control unit may be configured to adjust the ring-down time based on one or more previous measurement results. In this way, the ring-down time may be optimized for the liquid level to be measured.

Alternatively, or additionally, the control unit may be configured to detect two consecutive receipts of ultrasonic waves after the ring-down time, preferably the first two consecutive receipts of ultrasonic waves after the ring-down time. This embodiment is based on the effect that after emitting at the liquid-air interface, the ultrasonic waves may bounce back and forth between the device and the liquid-air interface multiple times before becoming undetectable. By detecting two consecutive receipts of ultrasonic waves after the ring-down time, it is possible to also determine a height of liquid above the device that is below the lower detection limit determined by the ring-down time.

According to a second aspect of the invention, there is provided a method for operating a device according to the first aspect of the invention, said method comprising the following steps:
a. suspending the device from the line in a body of liquid,
b. determining a speed of sound in the body of liquid, and
c. determining a liquid level above the device based on an output of the ultrasonic transducer assembly and the determined speed of sound.

In an embodiment, the sensor comprises a temperature sensor, and determining a speed of sound in the body of liquid includes measuring a temperature of the liquid in the body of liquid. The temperature is preferably measured with an accuracy of at most 0.5 degrees Celsius, and preferably in a range of 0-30 degrees Celsius.

In an embodiment, a measured temperature response of the temperature sensor is extrapolated to predict the temperature of the liquid in the body of liquid before the temperature response has stabilized, and wherein the predicted temperature is used to determine a speed of sound in the body of liquid.

In an embodiment, the determined liquid level above the device is corrected for an increased and/or varying liquid level due to the submersion of the device and line. In an embodiment, the determined liquid level above the device is extrapolated to predict the eventual liquid level before the liquid level has settled or stabilized, and wherein the predicted liquid level may be outputted.

In an embodiment, a temperature gradient in the liquid above the device is determined to more accurately determine the speed of sound in the liquid. In an embodiment, the temperature gradient is measured using an array of temperature sensors at different liquid levels. Additionally, or alternatively, the temperature gradient is estimated using an algorithm or model.

When the device is submersed in the body of liquid, it is likely that the liquid surface of the liquid body is disturbed resulting in waves or ripples in the liquid surface. This will result in a dynamically varying liquid level when looking at the output of the ultrasonic transducer assembly over time. This prevents the device from quickly measuring the liquid level. It may then be preferred that the method in step c. further includes estimating a static liquid level from the dynamically varying liquid level obtained by capturing the output of the ultrasonic transducer assembly over time.

According to a third aspect of the invention, there is provided a system including a device according to the first aspect of the invention and including an external device, wherein the external device is communicatively connected to the control unit of the device according to the first aspect of the invention to transfer input and/or output between the device according to the first aspect of the invention and an operator or user.

The connection between the control unit of the device according to the first aspect of the invention and the external device may be wired for power and/or data or may be wireless.

Features and/or embodiments described in relation to the first aspect may also be features and/or embodiments of the second aspect and vice versa, although this may require different language. A method step may for instance be used in connection with the device by changing the language to the device, control unit or other applicable component being configured to carry out the method step.

The same applies for the third aspect of the invention in relation to the first and second aspect of the invention.

### BRIEF DESCRIPTION OF THE DRAWINGS

The invention will now be described in a non-limiting way by reference to the accompanying drawings, in which:
- Fig. 1: schematically depicts a device for measuring a liquid level of a body of liquid according to an embodiment of the invention; and
- Fig. 2: schematically depicts a device for measuring a liquid level of a body of liquid according to another embodiment of the invention.

### DETAILED DESCRIPTION OF THE INVENTION

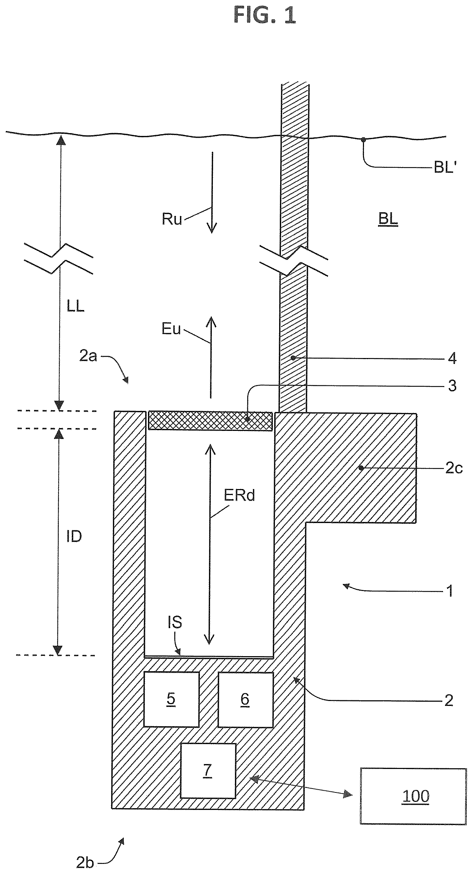

Fig. 1 schematically depicts a device 1 for measuring a liquid level LL of a body of liquid BL. The body of liquid BL may be a water body, e.g. a naturally occurring surface water body such as ditches, rivers, lakes and the sea, or an artificial water body in for instance a storage tank.

The device 1 comprises a housing 2 with a first end 2a and a second end 2b opposite the first end 2a. The housing 2 is preferably waterproof at the locations where this is necessary.

The device 1 further comprises an ultrasonic transducer assembly 3 for emitting and receiving ultrasonic waves. The ultrasonic transducer assembly 3 may include one or more transducer elements that are configured for both emitting and receiving ultrasonic waves but may alternatively include one or more transducer elements that are configured for emitting ultrasonic waves and one or more other transducer elements that are configured for receiving ultrasonic waves. For simplicity reasons, the ultrasonic transducer assembly 3 is depicted in Fig. 1 as a single component.

The device 1 further comprises a line 4 that is at least partially flexible and configured to suspend the housing 2 in the body of liquid BL with the first end 2a of the housing 2 forming a top side of the housing 2 and the second end 2b of the housing 2 forming a bottom side of the housing 2.

In the embodiment of Fig. 1, the line 4 is attached to the housing 2 in between a large portion including the ultrasonic transducer assembly 3 and a small portion 2c, which small portion 2c acts as a counterweight for the large portion such that when the housing 2 is suspended by the line 4, the large portion extends substantially vertical.

The ultrasonic transducer assembly 3 is arranged in or on the housing 2 at the first end 2a of the housing 2 for emitting and receiving ultrasonic waves in an upwards direction substantially parallel to the line 4 when the housing 2 is suspended from the line 4 in the body of liquid. The upwards direction of the emitted ultrasonic waves is indicated using arrow Eu. The ultrasonic waves reflect at least partially at a surface BL' of the body of liquid, alternatively referred to as the liquid-air interface BL', and travel at least partially back towards the ultrasonic transducer assembly 3 in a direction parallel to the line 4 indicated by arrow Ru.

The travelling time needed for the ultrasonic waves to travel from the ultrasonic transducer assembly 3 towards the surface BL' and back to the ultrasonic transducer assembly is representative for the distance LL, which is the height of the liquid column above the device 1, and which distance LL can be calculated using the speed of sound in the body of liquid.

The speed of sound in the body of liquid may not be known and/or may vary depending on the conditions, e.g. temperature and composition of the body of liquid. A default or predetermined speed of sound used to calculate the distance LL in prior art devices may thus not be accurate enough.

To improve the accuracy, the device 1 is provided with a sensor for determining a speed of sound in the body of liquid. In this embodiment, the sensor is formed by the ultrasonic transducer assembly 3 that is configured to also emit ultrasonic waves in a downwards direction opposite direction Eu to reflect of an internal surface IS of the housing 2 at a predetermined distance ID back to the ultrasonic transducer assembly 3 as indicated by double arrow ERd.

It will be appreciated by the skilled person that other configurations for determining a speed of sound in the body of liquid is also possible. In this embodiment, the ultrasonic transducer assembly 3 is used to emit ultrasonic waves in both directions. However, the ultrasonic waves to determine the speed of sound may also be emitted and/or received by other ultrasonic transducers then ultrasonic transducer assembly 3.

The space in between the ultrasonic transducer assembly 3 and the internal surface IS is accessible for the liquid so that the ultrasonic waves travelling between the ultrasonic transducer assembly 3 and the internal surface IS travel through the same liquid as the ultrasonic waves travelling between the ultrasonic transducer assembly and the surface BL'.

The travelling time needed for the ultrasonic waves to travel from the ultrasonic transducer assembly 3 towards the internal surface IS and back to the ultrasonic transducers assembly 3 is representative for the speed of sound in the body of liquid, which speed of sound can be calculated using the known distance ID. The construction of the housing 2 is preferably such that the distance ID is minimally affected by surrounding conditions like temperature. The construction of the housing 2 is also preferably such that the housing 2 has a minimal effect on the speed of sound in the cavity, for instance by influencing the liquid temperature.

The device 1 of Fig. 1 also includes the following components:
- a power unit 5, e.g. a battery, to power the device 1,
- a control unit 6 to operate the ultrasonic transducer assembly 3 to emit ultrasonic waves and to process the signals generated by the ultrasonic transducer assembly in response to incident ultrasonic waves, and
- a communication unit 7 configured to at least transmit data generated by the control unit to an external device 100. The communication unit 7 may be configured to only transmit data, i.e. as output, but may also be configured to receive incoming signals, i.e. as input, allowing to control operation of the device. In this embodiment, the communication unit 7 is configured to communicate wirelessly with the external device 100, e.g. a controller.

An advantage of the configuration of the device 1 of Fig. 1 is that the device 1 is wireless from a data point of view, but also from a power point of view. Embodiments in which the device 1 is only wireless from a data point of view or the device 1 is only wireless from a power point of view are of course also envisaged.

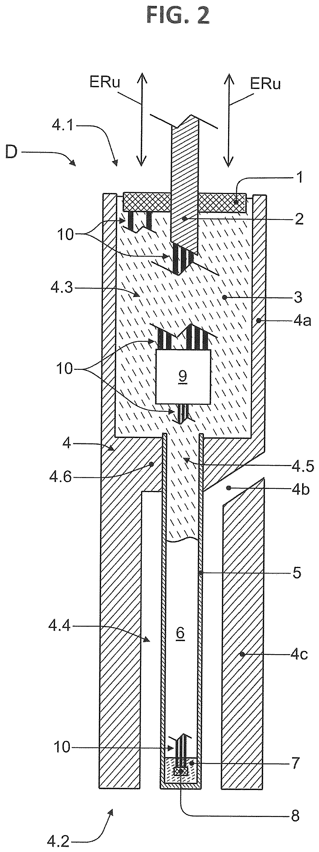

Fig. 2 depicts a cross-sectional view of a device D for measuring a liquid level of a body of liquid according to another embodiment of the invention.

The device D includes a housing 4, which housing 4 in this embodiment has a cylindrical shape, with a first end 4.1 and a second end 4.2 opposite the first end 4.1. In use, the first end 4.1 will form a top side of the housing 4 and the second end 4.2. will form a bottom side of the housing 4.

Extending from the first end 4.1 is an upper portion 4a of the housing 4 with a first cavity 4.3. Preferably, the first cavity 4.3. has a circular cross-section with a first diameter. Extending from the second end 4.2. is a lower portion 4c of the housing with a second cavity 4.4. Preferably, the second cavity 4.4 has a circular cross-section with a second diameter. As shown in Fig. 2, the second diameter of the second cavity 4.4. may be smaller than the first diameter of the first cavity 4.3.

Looking at the housing 4 only, the first cavity 4.3 and the second cavity 4.4 are in communication with each other via an opening 4.5 in a separating wall 4.6 in between the first and second cavities 4.3, 4.4. In an alternative embodiment, there is no separating wall 4.6 and the first and second cavities 4.3, 4.4 are adjacent to each other. In other words, the opening 4.5 has a cross-section identical to the second cavity 4.4.

Arranged inside the second cavity 4.4 and in this embodiment extending into the opening 4.5 of the separating wall 4.6 is a tube 5. The tube 5 is sealingly arranged in the opening 4.5 so that after assembly liquid is not able to enter the first cavity 4.3 from the second cavity 4.4 via the opening 4.5. The tube 5 is closed at a lower free end thereof, so that liquid is also not able to enter the first cavity 4.3. via the tube 5. A diameter of the tube 5 is in this embodiment substantially identical to the diameter of the opening 4.5 and thus smaller than a second diameter of the second cavity 4.4 so that liquid is able to completely surround the tube 5. This has the advantage that the tube 5 can have a constant cross-section and thus can be of a simple design. In an alternative embodiment, as described above, the opening 4.5 can be as large as the cross-section of the second cavity 4.4. In this case, to obtain the same kind of space around the tube 5, the tube 5 may have a first portion with a first cross-section to be received in the opening 4.5 and a second portion extending from the first portion with a smaller second cross-section.

To prevent air or other substances from getting trapped inside the second cavity 4.4 when the device D is submersed in the body of liquid, one or more openings 4b may be provided in the housing 4 extending from a top side of the second cavity 4.4 to outside the housing 4. Although not necessary, the one or more openings 4b may extend upwards, e.g. in an inclined manner as shown in Fig. 2, from the second cavity 4.4 to prevent air or other substances from getting trapped in the one or more openings 4b.

At or near the free end of the tube 5, a temperature sensor 8 is provided to measure a temperature of the body of liquid. The thermal contact between temperature sensor 8 and the tube 5, and thus with the surrounding liquid, is improved using for instance thermal paste 7 to increase the thermal conductivity. Thermal contact between temperature sensor 8 and the remainder of the device D is reduced using a thermal isolator 6, e.g. air, between the temperature sensor 8 and an upper end of the tube 5 where the tube is connected to the housing 4.

The thermal paste 7 and the thermal isolator 6 have the advantage that the thermal response of the temperature sensor is improved, meaning that the temperature of the temperature sensor will relatively quickly level to be substantially the same as the surrounding liquid resulting in a relatively quick reliable measurement of the temperature of the liquid in the body of liquid which measured temperature can be used to determine the speed of sound of the liquid.

As shown in Fig. 2, the tube 5 preferably does not extend beyond the second end 4.2 of the housing 4 to avoid damage to the tube 5 and/or temperature sensor 8. The tube 5 may for instance be flush with the second end 4.2. of the housing 4 or be retracted with respect to the second end 4.2.

An advantage of the lower portion 4c of the housing 4 is that this lower portion 4c may be used to add weight to the device D to overcome the buoyancy force caused by the displacement of the liquid when submersing the device D and/or to increase the net force down when the housing is suspended from the line in the body of liquid. To increase the weight and/or to lower the location of the center of gravity of the device D, the first diameter of the first cavity 4.3 may be increased and/or the second diameter of the second cavity 4.4 may be reduced. Hence, preferably, the second diameter of the second cavity is smaller than the first diameter of the first cavity.

An increased immersed weight has the advantage that the line can be kept taut thereby resulting in a more accurate measurement. A lower location of the center of gravity (or alternatively referred to as center of mass) has the advantage that the housing has a more stable orientation when suspended from the line in the body of liquid.

The device D is further provided with an ultrasonic transducer assembly 1 for emitting and receiving ultrasonic waves. The ultrasonic transducer assembly 1 is arranged at the first end 4.1 of the housing 4.

Both the temperature sensor 8 and the ultrasonic transducer assembly 1 may be connected to a control unit 9 configured to exchange power and data with the ultrasonic transducer assembly 1 and temperature sensor 8. The wires 10 to exchange the data and/or power with the control unit 9 are not shown completely to keep the drawing clear and simple, but parts of the wires are shown to extend from the ultrasonic transducer assembly 1, the temperature sensor 8, and the control unit 9, respectively.

Power and/or data exchange between the control unit 9 and an external device, e.g. a controller, is provided using a line 2 extending into the first cavity 4.3 through a center of the ultrasonic transducer assembly 1, wherein the line 2 includes wires 10 to transfer power and/or data to the control unit 9. Again, the wires 10 of the line 2 are only partially shown to keep the drawing clear and simple.

The first cavity 4.3 and in this embodiment a portion of the tube 5 are filled with a material 3 thereby embedding the control unit 9, a lower end of the line 2, and at least partially the ultrasonic transducer 1 such that liquid is prevented from reaching the wires 10, control unit 9 and tube 5. The material 3 is preferably chosen to have a dampening effect for the ultrasonic transducer 1 to keep the ringdown time relatively small allowing to quickly being able to receive ultrasonic waves after emitting ultrasonic waves.

The line 2 is at least partially flexible and configured to suspend the housing 4 in the body of liquid. Hence, in this embodiment, the material 3 provides a mechanical connection between the line 2 and the housing 4. When suspending the device D in the body of liquid using the line 2, the first end 4.1 forms the top side of the device D and the ultrasonic transducer assembly 1 is able to emit and receive ultrasonic waves in an upwards direction substantially parallel to the line 2 as indicated by two double arrows ERu.

Although the ultrasonic transducer assembly described above may have several possible embodiments, the embodiments may be classified as a first type where the same ultrasonic transducer elements are used for both emitting and receiving ultrasonic waves for detection purposes, and a second type where different ultrasonic transducer elements are used for emitting and receiving ultrasonic waves.

When the ultrasonic transducer assembly is of the first type, the one or more ultrasonic transducer elements will still vibrate after being driven, which vibrations will dampen over time. However, these vibrations may prevent the device from detecting any incoming ultrasonic waves for a predetermined amount of time, also referred to as the ring-down time, defining a lower detection limit associated with the ring-down time. The lower detection limit corresponds to a distance between the device and the liquid-air interface for which the ultrasonic waves travel from the device to the liquid-air interface and back to the device in the same time as the ring-down time.

To circumvent the lower detection limit, the control unit may be configured to vary the ring-down time, e.g. using a sweep and/or based on previous measurement data.

However, additionally or alternatively, the control unit may be configured to detect two consecutive receipts of ultrasonic waves at the device after the ring-down time thereby making use of the fact that the ultrasonic waves keep on reflecting between the device and the liquid-air interface until damped out. Hence, instead of measuring the first reflection of the ultrasonic waves, the control unit is configured to measure the n-th reflection and the (n+1)-th reflection.

The invention may be summarized using the following clauses:
1. A device for measuring a liquid level of a body of liquid, comprising:
   - a housing with a first end and a second end opposite the first end;
   - an ultrasonic transducer assembly for emitting and receiving ultrasonic waves, and
   - a sensor for determining a speed of sound in the body of liquid,
      wherein a line is provided that is at least partially flexible and configured to suspend the housing in the body of liquid with the first end of the housing forming a top side of the housing and the second end of the housing forming a bottom side of the housing,
      and wherein the ultrasonic transducer assembly is arranged in or on the housing at the first end of the housing for emitting and receiving ultrasonic waves in an upwards direction substantially parallel to the line when the housing is suspended from the line in the body of liquid.
2. A device according to clause 1, wherein the line is connected to the ultrasonic transducer assembly and/or sensor and configured for transferring power and/or data between the device and an external device.
3. A device according to clause 1 or 2, wherein the ultrasonic transducer assembly includes at least two portions that are arranged at opposite sides of the line.
4. A device according to any of the clauses 1-3, wherein the sensor comprises a temperature sensor to measure a temperature of the liquid in the body of liquid.
5. A device according to clause 4, wherein the temperature sensor is arranged in a tube that is configured to be surrounded by the liquid when the device is submersed in the body of liquid, wherein the temperature sensor is substantially isolated from the housing, and wherein preferably the temperature sensor is arranged to be thermally connected to the liquid when the device is suspended from the line in the body of liquid.
6. A device according to clause 5, wherein the tube is arranged not to extend beyond the second end of the housing.
7. A device according to clause 1, wherein the sensor comprises an ultrasonic transducer assembly to measure a traveling time of an ultrasonic wave over a predetermined distance to determine a speed of sound in the body of liquid.
8. A device according to clauses 4 and 7, wherein the sensor is further configured to determine a density and/or composition of the liquid of the body of liquid.
9. A device according to any of clauses, wherein the line has a first part and a second part, wherein the first part of the line extends between the housing and the second part of the line, and wherein the first part has a higher bending stiffness than the second part.
10. A method for operating a device according to any of clauses 1-9, said method comprising the following steps:
   a. suspending the device from the line in a body of liquid,
   b. determining a speed of sound in the body of liquid, and
   c. determining a liquid level above the device based on an output of the ultrasonic transducer assembly and the determined speed of sound.
11. A method according to clause 10, wherein the sensor comprises a temperature sensor, and wherein determining a speed of sound in the body of liquid includes measuring a temperature of the liquid in the body of liquid.
12. A method according to clause 11, wherein a measured temperature response of the temperature sensor is extrapolated to predict the temperature of the liquid in the body of liquid before the temperature response has stabilized, and wherein the predicted temperature is used to determine a speed of sound in the body of liquid.
13. A method according to any of clauses 10-12, wherein the determined liquid level above the device is corrected for an increased liquid level due to the submersion of the device and line.
14. A method according to clauses 11 or 12, wherein a temperature gradient in the liquid above the device is determined to more accurately determine the speed of sound in the liquid.
15. A method according to any of clauses 10-14, wherein in step c. the output of the ultrasonic transducer assembly over time results in a dynamically varying liquid level, and wherein step c. further includes estimating a static liquid level from the dynamically varying liquid level to determine the liquid level.

## Claims

1. A device for measuring a liquid level of a body of liquid, comprising:
- a housing with a first end and a second end opposite the first end,
- an ultrasonic transducer assembly for emitting and receiving ultrasonic waves, and
- a sensor for determining a speed of sound in the body of liquid,
wherein a line is provided that is at least partially flexible and configured to suspend the housing in the body of liquid with the first end of the housing forming a top side of the housing and the second end of the housing forming a bottom side of the housing,
wherein the ultrasonic transducer assembly is arranged in or on the housing at the first end of the housing for emitting and receiving ultrasonic waves in an upwards direction substantially parallel to the line when the housing is suspended from the line in the body of liquid in order to reflect from a liquid-air interface,
and wherein the device further includes a control unit to operate the ultrasonic transducer assembly and to receive an output from the ultrasonic transducer assembly and the sensor to determine a height of a liquid column present above the device based on said output.

2. A device according to claim 1, wherein the line is connected to the ultrasonic transducer assembly and/or sensor and configured for transferring power and/or data between the device and an external device.

3. A device according to claim 1 or 2, wherein the ultrasonic transducer assembly includes at least two portions that are arranged at opposite sides of the line.

4. A device according to any of the claims 1-3, wherein the sensor comprises a temperature sensor to measure a temperature of the liquid in the body of liquid.

5. A device according to claim 4, wherein the temperature sensor is arranged in a tube that is configured to be surrounded by the liquid when the device is submersed in the body of liquid, wherein the temperature sensor is substantially isolated from the housing, and wherein preferably the temperature sensor is arranged to be thermally connected to the liquid when the device is suspended from the line in the body of liquid.

6. A device according to claim 5, wherein the tube is arranged not to extend beyond the second end of the housing.

7. A device according to claim 1, wherein the sensor comprises an ultrasonic transducer assembly to measure a traveling time of an ultrasonic wave over a predetermined distance to determine a speed of sound in the body of liquid.

8. A device according to claims 4 and 7, wherein the sensor is further configured to determine a density and/or composition of the liquid of the body of liquid.

9. A device according to any of claims, wherein the line has a first part and a second part, wherein the first part of the line extends between the housing and the second part of the line, and wherein the first part has a higher bending stiffness than the second part.

10. A method for operating a device according to any of claims 1-9, said method comprising the following steps:
a. suspending the device from the line in a body of liquid,
b. determining a speed of sound in the body of liquid, and
c. determining a liquid level above the device based on an output of the ultrasonic transducer assembly and the determined speed of sound.

11. A method according to claim 10, wherein the sensor comprises a temperature sensor, and wherein determining a speed of sound in the body of liquid includes measuring a temperature of the liquid in the body of liquid.

12. A method according to claim 11, wherein a measured temperature response of the temperature sensor is extrapolated to predict the temperature of the liquid in the body of liquid before the temperature response has stabilized, and wherein the predicted temperature is used to determine a speed of sound in the body of liquid.

13. A method according to any of claims 10-12, wherein the determined liquid level above the device is corrected for an increased liquid level due to the submersion of the device and line.

14. A method according to claims 11 or 12, wherein a temperature gradient in the liquid above the device is determined to more accurately determine the speed of sound in the liquid.

15. A method according to any of claims 10-14, wherein in step c. the output of the ultrasonic transducer assembly over time results in a dynamically varying liquid level, and wherein step c. further includes estimating a static liquid level from the dynamically varying liquid level to determine the liquid level.
